# EUROPÄISCHE PATENTSCHRIFT

(11) **EP 4 003 050 B1**
(45) Veröffentlichungstag und Bekanntmachung des Hinweises auf die Patenterteilung: **02.08.2023**
(21) Anmeldenummer: 20734920.0
(22) Anmeldetag: 25.06.2020
(51) Int. Cl.: A23K 10/30, A23K 20/10, A23K 20/174, A23K 20/24, A23K 20/26, A23K 50/70, A23K 50/75, A23K 20/105, A23K 20/142

(54) **VERWENDUNG EINER ZUSAMMENSETZUNG ZUR VERMINDERUNG DES FEDERVERLUSTES VON VÖGELN**
USE OF A COMPOSITION TO REDUCE FEATHER LOSS IN BIRDS
UTILISATION D'UNE COMPOSITION POUR RÉDUIRE LA PERTE DE PLUMES CHEZ LES OISEAUX

(30) Priorität: 26.07.2019 DE 102019120244
(43) Veröffentlichungstag der Anmeldung: 01.06.2022
(73) Patentinhaber: Alzchem Trostberg GmbH, 83308 Trostberg (DE)
(72) Erfinder: SANS, Jürgen, 83308 Trostberg (DE)
(74) Vertreter: Dey, Michael
(86) Internationale Anmeldenummer: PCT/EP2020/067850
(87) Internationale Veröffentlichungsnummer: WO 2021/018488

(56) Entgegenhaltungen:
- CN-A- 105 076 719
- H. EL-LETHEY ET AL: "Stress and feather pecking in laying hens in relation to housing conditions", BRITISH POULTRY SCIENCE., Bd. 41, Nr. 1, 1. März 2000 (2000-03-01), Seiten 22-28, XP55731462, GB ISSN: 0007-1668, DOI: 10.1080/00071660086358
- "Evonik Industries | CreAMINO? Report | Issue 01 Page 1/4", , 26. August 2007 (2007-08-26), XP055123811, Gefunden im Internet: URL:http://feed-additives.evonik.com/sites /dc/Downloadcenter/Evonik/Product/Feed-Add itives/Others/creamino-report.pdf [gefunden am 2014-06-17]
- Aranjo, L. ET AL: "PP V-66 Effects of GUANIDINOACETIC ACID ON THE PERFORMANCE OF BROILER BREEDERS AND ITS EFFECT OF THE PROGENIES", , 1. Januar 2013 (2013-01-01), XP055123806, Gefunden im Internet: URL:http://www.wpsa.com/proceedings/ESPN_2 013/assets/pdf/0091.pdf [gefunden am 2014-06-17]

## Beschreibung

Die vorliegende Erfindung betrifft die Verwendung einer Zusammensetzung enthaltend Guanidinoessigsäure und Glycin zur Verminderung des Federverlustes bei Vögeln.

H. EI-Lethey et al., British Poultry Science (2000) 41:22-28 beschreibt Stress und Federpicken bei Legehennen in Abhängigkeit von den Haltungsbedingungen.

CN 105076719 A beschreibt ein Futter-Premix für Geflügel umfassend eine Reihe von Inhaltsstoffen, darunter Nikotinamid, Folsäure, Betain, Zeolith-Pulver und Guanidinoessigsäure.

Ziervögel erfreuen sich weltweit großer Beliebtheit. Die Qualität des Gefieders hängt von der Ernährung ab. Nährstoffmangel kann nachteilig wirken, da bei Mangelerscheinungen entweder die Färbung untypisch wird oder die Federn ausfallen oder die Federn nicht die gewünschte Größe erreichen. Der Ersatz des Federkleides läuft evolutionsbedingt jedoch mit hoher Priorität ab, da die Überlebensfähigkeit des Einzeltieres oder sogar der Art stark von einem intakten Federkleid abhängt (Thermoregulation, Flugvermögen, Tarnung und Kommunikation).

Vogelbesitzer erfreuen sich an der Farbenpracht und einer guten Qualität des Federkleides der Tiere. Daher wird auf dem Markt für Ziervogelfutter eine Vielzahl von Ergänzungsmitteln angeboten, die eine Verbesserung der Gefiederqualität oder eine kurze Mauser versprechen. Diese beinhalten typischerweise Spurenelemente (Cu, Zn, Se) aber auch Vitamine oder Kieselsäure.

Nutztiere unter den Vögeln benötigen per se nur in untergeordnetem Maße ein intaktes Federkleid. Bedingt durch die evolutionäre Priorisierung streben jedoch auch Nutztiere nach einem intakten Federkleid und nutzen die zur Verfügung stehenden Nährstoffe aus der Nahrung im Falle von Defekten am Federkleid (ausgerissene, abgebrochene oder ausgepickte Federn) mit hoher Priorität zu dessen Regenerierung.

Durch Züchtungsstrategien können bei Nutztieren selektiv Gene eingekreuzt werden, die phänotypische Veränderungen bewirken. Diese Gene sind zum Beispiel Gene für Befiederungsreduktion und Nackthalsigkeit, für Lockenfiedrigkeit und für langsame Befiederung. Doch auch diese Tiere streben entsprechend der eingekreuzten Gene nach einem intakten Federkleid.

Federn können bei kleinen Vögeln über 10 % der Körpermasse ausmachen [Rabehl, N. (1995), Dissertation Tierärztl. Hochsch. Hannover, Untersuchungen zur Körperzusammensetzung und deren Entwicklung bei verschiedenen Ziervogelarten]. In Federn sind typischerweise 7,9 % Feuchtigkeit, 90,7 % Rohprotein und 1,3 % Rohfett enthalten [McCashland, W.E. u. Richardson L.R. (1966) Poult. Sci. 45, 1231-1236]. Verschiedene Autoren fanden hier eine Schwankungsbreite für Rohprotein zwischen 85 % und 99 % für Federn verschiedener Spezies [Fischer, P. W. (1983) Effects of zinc on muscosal copper binding and on the kinetis of copper absorption, J. Nutr. 113, 462 - 469; Han, Y. u. C. M. Parsons (1991) Protein and amino acids quality of feather meals, Poult. Sci. 70, 812 - 822; Papadopoulos, M. C.; A. R. EI Bousky; A. E. Roodbeen; E. H. Ketelars (1986), Effects of processing time and moisture content on amino acid composition and nitrogen characteristics of feather meal, Anim. Feed Sci. Technol. 14, 279 - 290].

An essentiellen Aminosäuren sind im Gefieder im wesentlichen Arginin (50,8 bis 78,1 mg/g Rohprotein), Leucin (67,9 bis 116 mg/g Rohprotein), Valin (66,8 bis 111 mg/g Rohprotein), Cystin (70,9 bis 108 mg/g Rohprotein), Phenylalanin (29,9 bis 55,0 mg/g Rohprotein), Threonin (42,4 bis 53,0 mg/g Rohprotein), Isoleucin (42,8 bis 64,0 mg/g Rohprotein) und Tyrosin (28,6 bis 57,7 mg/g Rohprotein) zu finden.

An nicht-essentiellen Aminosäuren sind Alanin (36,0 bis 56,3 mg/g Rohprotein), Aspartat (63,3 bis 80,5 mg/g Rohprotein), Glycin (64,5 bis 105 mg/g Rohprotein), Prolin (88,2 bis 143 mg/g Rohprotein) und Serin (88,3 bis 118 mg/g Rohprotein) zu finden. Aber auch Histidin, Lysin, Methionin und auch Spuren Tryptophan sind im Gefieder enthalten.

Die oben genannten Daten wurden an verschiedenen Vogelspezies erhoben und sind zusammengestellt [N. Jürgens, (2005) Untersuchungen zum möglichen Einfluss verschiedener Nährstoffergänzungen im Futter auf den Ersatz, das Wachstum sowie die Zusammensetzung und Qualität von Federn bei adulten Agarporniden, Dissertation Tierärztliche Hochschule Hannover].

Unter Berücksichtigung der Tatsache, dass Federn mit hoher Priorität wieder gebildet werden, ist es ersichtlich, dass ein Verlust von Federn mit einem Verlust von Protein einhergeht. Somit ist bei Nutztieren ein Verlust von Federn unbedingt zu vermeiden. Verluste von Federn bei Ziervögeln sind vorwiegend optischer Natur und stören den Vogelbesitzer. Verluste von Federn bei Nutztieren sind direkt wirtschaftlich relevant, da Futtermittel in Form von Federn verloren geht und nicht der Produktion von Tiermasse oder Eimasse oder zur Reproduktion zur Verfügung steht.

In der Fachliteratur werden diverse positive und negative nutritive Einflüsse beschrieben, wobei jeweils der Melaningehalt der Federn zur Bewertung von positiven oder negativen Einflüssen verwendet wird. So wurden negative Einflüsse auf den Melaningehalt von Federn bei Lysinmangel in der Ernährung von Puten, japanischen Wachteln und Hühnern gefunden; i) Puten [Fritz, M. D.; Hooper, J. H.; Halpin, J. L.; Moore, H. P. (1946): Failure of feather pigmentation in bronze poults due to lysine deficiency; J. Nutr. 31, 387 - 396]; ii) japanische Wachteln [Svacha, A.; Weber, C. W.; Reid, B. L. (1970): Lysine, methionine and glycine requirements of the Japanese quail to five weeks of age; Poult. Sci. 49, 54 - 59]; iii) Hühner [Klain, G. J.; Hill, D. C.; Branion, H. D. (1956): Feather pigmentation of chicks fed lysine deficient diets; Poult. Sci. 35, 1151]. Weiterhin wurden negative Einflüsse auf den Melaningehalt von Federn bei Folsäuremangel in der Ernährung bei Hühnern gefunden [Briggs, G. M.; Lillie, R. L. (1946): Folie acid in the prevention of abnormal feather pigmentation of chicks fed purified diets; Federation Proceedings 5, 124]. Weiterhin wurden negative Einflüsse auf den Melaningehalt von Federn bei Kupfer- und Eisen-Mangel in der Ernährung bei Hühnern gefunden [Hill, C. H.; Metrone, G. (1961): Study on copper and iron deficiency in growing chickens; J. Nutr. 73, 425 - 431].

Positive Einflüsse auf den Melaningehalt von Federn wurden gefunden bei Hühnern im Falle einer Supplementierung mit Thyroxin [Juhn, M.; Gustavson, R. G. (1930): The production of female genital subsidiary characters and plumage sex characters by injection of human placental hormone in fowl; J. Exp. Zool. 56, 31 - 61]. Positive Einflüsse bei Hühnern konnten aber auch erzielt werden durch Generierung eines Mangels entweder an Vitamin D oder an Kalzium [Glazener, E. W.; Mattingly, J. P.; Briggs, G. M. (1946): Abnormal blackening of the feather of New Hampshire chicks as the result of the vitamin D deficiency; Poult. Sci. 25, 85 - 86].

Der Bedarf an Aminosäuren kann sich mit dem Heranwachsen der Vögel ändern. Unbefiederte Wachteln (0 bis 3 Wochen) haben einen höheren Bedarf an Lysin, Methionin und Glycin als Wachteln in der 4. Lebenswoche [Svacha, A.; Weber, C. W.; Reid, B. L. (1970): Lysine, methionine and glycine requirements of the Japanese quail to five weeks of age; Poult. Sci. 49, 54 - 59].

Es wurde auch gefunden, dass die Supplementierung von Kanarien mit Kalzium, Natrium, Zink und S-haltigen Aminosäuren negativ sein kann und zu über 50 % mehr Federverlusten über einen Zeitraum von 80 Tagen führt als bei Gabe von Standardsämereien, nämlich von 5,03 mg/(Tier*Tag) Federverlust mit Standardsämereien auf 7,84 mg/(Tier*Tag) Federverlust mit supplementierten Standardsämereien [Wolf, P.; Rabehl, N.; Pannevis, M. (1996): Befiederung, Federverluste und -wachstum bei kleinen Ziervögeln (Kanarien, Wellensittiche und Agaporniden), Tagungsbericht der Deutschen Veterinärmedizinischen Gesellschaft X. Tagung über Vogelkrankheiten, 10 - 17].

Zusammenfassend kann gesagt werden, dass der Einfluss der Ernährung auf den Federverlust von Vögeln noch nicht im Detail verstanden ist, weder während der Mauser noch außerhalb hiervon.

Der vorliegenden Erfindung liegt daher die Aufgabe zugrunde, einen Futtermittelzusatz für Vögel zur Verfügung zu stellen, der bei Anwendung den Verlust von Federn der Vögel minimiert.

Gelöst wird diese Aufgabe durch eine Verwendung gemäß Anspruch 1. Bevorzugte Ausführungsformen der Erfindung sind in den Unteransprüchen angegeben, die wahlweise miteinander kombiniert werden können.

Somit ist gemäß einer ersten Ausführung die Verwendung einer Zusammensetzung enthaltend Guanidinoessigsäure und Glycin zur Verminderung des Federverlustes von Vögeln während der Aufzucht, während der Haltung oder in der Mast der Vögel Gegenstand der vorliegenden Erfindung.

Erfindungswesentlich wird in dieser Verwendung während der Aufzucht, während der Haltung oder in der Mast der Vögel, eine Zusammensetzung enthaltend Guanidinoessigsäure und Glycin eingesetzt. Die Zusammensetzung kann dabei als Feststoffzubereitung in einem Futter oder gelöst in Wasser als Tränklösung eingesetzt werden. Das Futter oder die Tränklösung werden dabei den Vögeln für die normale Ernährung bereitgestellt.

Guanidinoessigsäure (syn. Glycocyamin, N-Guanylglycin, N-Amidinoglycin; C₃H₇N₃O₂; CAS-Nr. 352-97-6) ist seit einiger Zeit als Futtermittelzusatz auf dem Markt erhältlich und ist in der Geflügelmast zugelassen. Vielfältige Studien haben u.a. gezeigt, dass Guanidinoessigsäure eine Verbesserung der Futteraufnahme und eine Steigerung der Mastleistung bewirkt.

Glycin (syn. Glycoll, Aminoessigsäure, Aminoethansäure; C₂H₅NO₂, CAS-Nr. 56-40-6) ist als Lebensmittelzusatzstoff E640 ohne Mengenbeschränkung in der EU zugelassen, und ist ebenfalls seit geraumer Zeit als Futtermittelzusatz auf dem Markt erhältlich und in der Geflügelmast zugelassen. Studien für Hühner [Corzo A.; Kidd, M.T. (2004) Dietary Glycine needs of broiler chicks, Poult. Sci. 83(8), 1382-4)] haben gezeigt, dass Glycin ein limitierender Nährstoff ist, obwohl er im Tier auch selbst produziert wird. Es wurde bestimmt [Graber, G.; Baker, D.H. (1973) The essential nature of glycine and proline for growing chicks, Poult. Sci. 52, 892-896)], dass die Tiere nur 60 - 70 % des für optimales Wachstum benötigten Bedarfes selbst produzieren.

Im Gegensatz zu Kreatin weisen Guanidinoessigsäure und deren Salze in saurer wässriger Lösung eine deutlich höhere Stabilität auf und werden erst unter physiologischen Bedingungen in Kreatin umgewandelt. Guanidinoessigsäure wird hierbei erst nach der Resorption, vor allem in der Leber, in Kreatin umgewandelt. Somit wird im Gegensatz zum Kreatin der überwiegende Teil der verabreichten bzw. gefütterten Guanidinoessigsäure nicht durch Instabilitätsreaktionen, z. B. im Magen, abgebaut und vor der Resorption ausgeschieden, sondern steht tatsächlich für die entsprechenden physiologischen Stoffwechselreaktionen zur Verfügung.

Überraschender Weise hat sich nunmehr in Fütterungsversuchen gezeigt, dass die Verabreichung einer Zusammensetzung enthaltend Guanidinoessigsäure und Glycin zu dem gewünschten Nutzen, nämlich der Reduzierung des Verlustes an Federn bei Vögeln führt. So konnte beobachtet werden, dass der Federverlust derjenigen Vögel, die ein mit Guanidinoessigsäure und Glycin angereichertes Futter erhalten haben, im Vergleich zur Kontrollgruppe, die dasselbe Futter jedoch ohne Zusatz von Guanidinoessigsäure und Glycin erhalten hat, gesenkt werden kann. Diese Wirkung ist im Vergleich zu allein mit Glycin angereichertem Futter sowie im Vergleich zu allein mit Guanidinoessigsäure angereichertem Futter zu beobachten, wobei vollkommen überraschend eine synergistische Wirkung der beiden Einzelstoffe beobachtet wird.

Der Federverlust wird bei der Supplementierung mit Guanidinoessigsäure und Glycin im Vergleich zur Fütterung mit dem gleichen Basisfutter ohne Zugabe von Guanidinoessigsäure und Glycin vorzugsweise um mindestens 5 %, mehr bevorzugt um mindestens 6 %, noch mehr bevorzugt um mindestens 8 %, besonders bevorzugt um mindestens 10 %, weiterhin bevorzugt um mindestens 12 % und am meisten bevorzugt um mindestens 14 % reduziert.

Diese Wirkung ist umso mehr überraschend, als dass Guanidinoessigsäure eine gesteigerte Fleischproduktion bei gleichzeitig geringerem Futtermitteleinsatz bewirkt. Aus energetischer und ernährungsphysiologischer Sicht wäre daher eher ein Mangel an Nährstoffen in den Federn zu erwarten, welche eher zu einem Federnverlust führen sollte.

Im Tierkörper kann die nicht essentielle Aminosäure Glycin gebildet werden aus 3-Phosphoglycerat, einem Intermediat der Glycolyse, über Serin als Zwischenschritt. In einem weiteren Schritt wird aus Glycin und L-Arginin die Guanidinoessigsäure gebildet. Guanidinoessigsäure wird weiter zu Kreatin methyliert. Kreatin spielt eine wichtige Rolle in der Energiebereitstellung der Zelle. Da die Guanidinoessigsäure aus Glycin gebildet wird, war nicht zu erwarten, dass bei Verabreichung beider Komponenten ein positiver synergistischer Effekt auftritt.

Ohne an die Theorie gebunden zu sein, wird daher angenommen, dass die gleichzeitige Gabe von Guanidinoessigsäure und von Glycin positive Effekte aufweist, die nicht an den Energiestoffwechsel gekoppelt sind.

Bevorzugt kann eine Zusammensetzung eingesetzt werden, die Guanidinoessigsäure und Glycin enthält, wobei das Gewichtsverhältnis Guanidinoessigsäure zu Glycin im Bereich von 1 : 1 bis 100 : 1, bevorzugt 1 : 1 bis 10 : 1, weiter bevorzugt 1,5 : 1 bis 10 : 1, weiter bevorzugt 2 : 1 bis 8 : 1 und bevorzugt 2 : 1 bis 6 : 1 liegt.

Gemäß einer bevorzugten Ausführung der Erfindung kann vorgesehen sein, dass die Verwendung derart erfolgt, dass die Zusammensetzung als Feststoffzubereitung in einem Futter für die Vögel bereitgestellt wird. Weiter bevorzugt wird die Zusammensetzung als Feststoffzubereitung in einem Futter für die Vögel bereitgestellt, wobei das Futter ein Basisfutter, die Guanidinoessigsäure in einer Menge von 0,1 bis 5 g pro 1 kg Basisfutter und das Glycin in einer Menge von 0,01 bis 2,5 g pro 1 kg Basisfutter enthält.

Hierbei kann das Futter weiter bevorzugt die Guanidinoessigsäure in einer Menge von mindestens 0,2 g, bevorzugt mindestens 0,3 g, weiter bevorzugt von mindestens 0,4 g pro 1 kg Basisfutter enthalten. Weiterhin bevorzugt kann das Futter die Guanidinoessigsäure in einer Menge von höchstens 5 g, weiter bevorzugt höchstens 4 g, weiter bevorzugt höchstens 3 g und besonders bevorzugt von höchstens 2,5 g, pro 1 kg Basisfutter enthalten.

In einer weiteren bevorzugten Ausführungsform enthält das Futter die Guanidinoessigsäure vorzugsweise in einer Menge von 0,01 g bis 1 g, noch mehr bevorzugt in einer Menge von 0,1 g bis 1 g pro 1 kg Basisfutter.

Hierbei kann das Futter weiter bevorzugt das Glycin in einer Menge von mindestens 0,02 g, bevorzugt mindestens 0,03 g weiter bevorzugt von mindestens 0,04 g pro 1 kg Basisfutter enthalten. Weiterhin bevorzugt kann das Futter das Glycin in einer Menge von höchstens 2,5 g, weiter bevorzugt höchstens 2 g, weiter bevorzugt höchstens 1 g und besonders bevorzugt von höchstens 0,6 g, pro 1 kg Basisfutter enthalten.

Somit ist eine Verwendung besonders bevorzugt, in der die Zusammensetzung als Feststoffzubereitung in einem Futter für die Vögel bereitgestellt wird, wobei das Futter ein Basisfutter, die Guanidinoessigsäure in einer Menge von 0,4 bis 1,2 g pro 1 kg Basisfutter und das Glycin in einer Menge von 0,04 bis 0,6 g pro 1 kg Basisfutter enthält.

Besonders bevorzugt ist eine Verwendung einer Zusammensetzung, die aus der Guanidinoessigsäure und dem Glycin besteht.

Gemäß einem weiterführenden Gedanken kann die Zusammensetzung auch als wässrige Lösung in Form einer Tränklösung für die Vögel bereitgestellt werden. Somit ist auch eine Verwendung einer Zusammensetzung enthaltend Guanidinoessigsäure und Glycin zur Verminderung des Federverlustes von Vögeln während der Aufzucht, während der Haltung oder während der Mast der Vögel Gegenstand der vorliegenden Erfindung, wobei die Zusammensetzung als Tränklösung für die Vögel bereit gestellt wird und wobei die Tränklösung bevorzugt Wasser, die Guanidinoessigsäure in einer Menge von 0,05 bis 1,2 g, insbesondere 0,4 bis 1,2 g, oder weiter bevorzugt von 0,1 bis 0,3 g pro 1 l Wasser, und das Glycin in einer Menge von 0,005 g bis 0,12 g, insbesondere 0,04 bis 0,12 g, pro 1 l Wasser enthält.

Die Konzentration der wässrigen Lösung kann in Abhängigkeit von der Größe, des Alters und/oder des Gewichtes des Geflügels variiert werden. Bevorzugt weist die Lösung eine Konzentration von Guanidinoessigsäure in Wasser von mindestens 0,05 g/ l, weiter bevorzugt von mindestens 0,1 g/ l auf, und gleichzeitig oder unabhängig hiervon weiter bevorzugt von höchstens 1,2 g/ I, weiter bevorzugt höchstens 1 g/ l, weiterbevorzugt von höchstens 0,8 g/ l, weiter bevorzugt von höchstens 0,6 g/ l, besonders bevorzugt von höchstens 0,5 g/ l, besonders bevorzugt von höchstens 0,4 g/ l und ganz besonders bevorzugt von höchstens 0,3 g/ l auf.

Weiter bevorzugt weist die Lösung eine Konzentration von Glycin in Wasser von mindestens 0,005 g/ l, weiter bevorzugt von mindestens 0,01 g pro 1 l Wasser auf, und gleichzeitig oder unabhängig hiervon weiter bevorzugt von höchstens 0,12 g pro 1 I Wasser, weiter bevorzugt höchstens 0,1 g pro 1 I Wasser, besonders bevorzugt von höchstens 0,05 g pro 1 I Wasser auf.

Bevorzugt weist die Lösung eine Konzentration von Guanidinoessigsäure in Wasser von 0,1 bis 0,8 g/ l, besonders bevorzugt von 0,1 bis 0,5 g/ l und ganz besonders bevorzugt von 0,1 bis 0,3 g/ l auf, und eine Konzentration von Glycin in Wasser von 0,01 bis 0,08 g/ l, besonders bevorzugt von 0,01 bis 0,05 g/ l, und ganz besonders bevorzugt von 0,01 bis 0,03 g/ l auf.

Ganz besonders bevorzugt wird hierbei das Futter oder die Tränklösung den Vögeln ad-libitum für die Ernährung der Vögel bereitgestellt.

Im Zusammenhang mit der vorliegenden Erfindung soll unter dem Begriff *ad-libitum* eine Menge an Futter und eine Menge an Tränklösung verstanden sein, die den täglichen Bedarf an Futter und an Tränklösung für die Ernährung jedes einzelnen Individuums, das betrachtet wird, oder bezogen auf die Gesamtheit an Individuen, die betrachtet werden, den täglichen Bedarf für die Ernährung der Gesamtheit der Individuen übersteigt. Somit soll gemäß der vorliegenden Erfindung das Futter oder die Tränklösung vorzugsweise *"ad libitum",* nämlich im Überschuss zur freien Verwendung des Vogels bzw. der Vögel bereitgestellt werden.

Somit unterscheidet sich die bevorzugte Verwendung *ad libitum* deutlich von einer spezifischen Verabreichung eines Wirkstoffes, der beispielsweise täglich in Form einer definierten Menge von 500 mg pro Tag in Einzeldosen und unabhängig von weiteren Nahrungs- oder Lebensmitteln verabreicht wird. Umso überraschender ist es, dass die alleinige Bereitstellung von einem Futter *ad libitum,* nämlich zur freien Verfügung der Vögel, enthaltend ein Basisfutter, Guanidinoessigsäure in einer Menge von 0,1 bis 5 g pro 1 kg Futter und Glycin in einer Menge von 0,01 bis 2,5 g pro 1 kg Futter oder einer Tränklösung *ad libitum,* nämlich zur freien Verfügung der Vögel, enthaltend Wasser, Guanidinoessigsäure in einer Menge von 0,05 bis 1,2 g pro 1 l Wasser und Glycin in einer Menge von 0,005 bis 0,12 g Glycin pro 1 l Wasser zu dem erwünschten Erfolg, nämlich der Verringerung des Federverlustes, führt.

Es hat sich gezeigt, dass die erfindungsgemäße Verwendung der Guanidinoessigsäure in Kombination mit Glycin nicht auf die Substanzen als solche beschränkt ist. Vielmehr hat sich gezeigt, dass in der Verwendung sowohl Guanidinoessigsäure als solche, nämlich als freie Säure, oder auch als Salz der Guanidinoessigsäure eingesetzt werden kann.

Somit ist auch eine bevorzugte Verwendung der vorliegenden Erfindung umfasst, in der die Zusammensetzung
i) die Guanidinoessigsäure als freie Säure oder in Form eines Salzes dieser Säure und/oder
ii) das Glycin als freie Säure oder in Form eines Salzes dieser Säure,
enthält.

Besonders bevorzugt kann dabei als Salz ein Salz ausgewählt aus der Gruppe der Alkali- oder Erdalkalisalze der Guanidinoessigsäure eingesetzt werden. Ganz besonders bevorzugt können hierbei Natrium-Guanidinoacetat, Kalium-Guanidinoacetat, Magnesium-Guanidinoacetat oder Calcium-Guanidinoacetat, eingesetzt werden.

Weiterhin hat sich gezeigt, dass in der Verwendung sowohl Gycin als solche, nämlich als freie Säure, oder auch in Form eines Salzes des Glycin eingesetzt werden kann. Besonders bevorzugt kann dabei als Salz ein Salz ausgewählt aus der Gruppe der Alkali- oder Erdalkalisalze des Glycins, insbesondere Natrium-Glycinat, Kalium-Glycinat, Magnesium-Glycinat oder Calcium-Glycinat eingesetzt werden.

Die hierin beschriebene Erfindung kann bei einer Vielzahl an verschiedenen Vögeln Anwendung finden. Besonders bevorzugt kann die Zusammensetzung enthaltend Guanidinoessigsäure und Glycin bei Vögeln aus der Gruppe der Ziervögel oder aus der Gruppe der Zucht- und Mastvögel verwendet werden. Ganz besonders bevorzugt werden hierbei Vögel aus der Gruppe der Ziervögel, insbesondere Kanarienvögel, oder aus der Gruppe der Zucht- und Mastvögel, insbesondere Geflügel, ausgewählt aus der Gruppe Enten, Gänse, Hühner, Hähnchen, Legehennen, Broiler, Truthähne, Wachteln, Strauße und Puten.

Weiterhin hat sich mit den der Erfindung zugrundeliegenden Untersuchungen gezeigt, dass das eingesetzte Basisfutter einen definierten Brennwert haben sollte. Einerseits sollte das Basisfutter einen für die normale Ernährung und gesundes Wachstum festgelegten Brennwert nicht unterschreiten und andererseits auch nicht überschreiten, um eine Fettleibigkeit zu vermeiden. So haben sich gute Ergebnisse gezeigt, wenn das Basisfutter für Ziervögel oder für Zucht- oder Mastvögel einen Brennwert von 8 MJ bis 20 MJ pro 1 kg Basisfutter, insbesondere von 10 MJ bis 15 MJ pro 1 kg Basisfutter aufweist und/ oder das Basisfutter ein bilanziertes Basisfutter gemäß Animal Nutrition Handbook, 3rd Revision, 2014 Section 12, Poultry Nutrition and Feeding ist.

Dabei kann sowohl das Verfahren als auch die Verwendung besonders bevorzugt ausgeführt werden, wenn das Basisfutter mindestens ein Getreide, ein Getreidemehl, ein Getreideschrot oder Extrakte hieraus, umfasst. Weiterhin bevorzugt ist hierbei ein Verfahren oder eine Verwendung in dem mindestens ein Getreide, ein Getreidemehl, ein Getreideschrot oder Extrakte hieraus, ausgewählt wird aus der Gruppe:
a. Mais, Maismehl, Maisschrot oder ein Extrakt hieraus,
b. Hirse, Hirsemehl, Hirseschrot oder ein Extrakt hieraus,
c. Soja, Sojamehl, Sojaschrot oder ein Extrakt hieraus,
d. Weizen, Weizenmehl, Weizenschrot oder ein Extrakt hieraus
   und/oder
e. Gerste, Gerstenmehl, Gerstenschrot oder ein Extrakt hieraus.

Weiterhin kann die Verwendung besonders bevorzugt ausgeführt werden, wenn das Basisfutter mindestens einen weiteren Futtermittelzusatz, insbesondere einen weiteren Futtermittelzusatz aus der Gruppe der Mineralstoffe Aminosäure und Vitamine, umfasst. Ganz besonders bevorzugt kann dieser Futtermittelzusatz ausgewählt werden aus der Gruppe Calciumcarbonat, Mono- oder Dicalciumphosphat, Lysin, Methionin, Threonin, Thryptophan, Valin, Arginin und Vitamine sowie Mischungen davon.

In einer besonders bevorzugten Ausführungsform wird ein Basisfutter verwendet, welches selbst keinen Gehalt an Guanidinoessigsäure und keinen Gehalt an Glycin aufweist.

Ein bevorzugtes Basisfutter umfasst
10 % bis 20 %, insbesondere 15 % Plata Hirse,
8 % bis 12 %, insbesondere 10 % Rübsen,
3 % bis 5 %, insbesondere 4 % Leinsamen,
20 % bis 25 %, insbesondere 23 % schwarze Rübsen,
20 % bis 30 %, insbesondere 27 % Kanariensaat, sowie
18 % bis 25 %, insbesondere 21 % Haferkerne.

Ein weiteres bevorzugtes Basisfutter umfasst
45 % bis 55 %, insbesondere 50 % Mais,
24 % bis 30 %, insbesondere 27 % Weizen, sowie
20 % bis 25 %, insbesondere 23 % Sojabohnenkernmehl.

Weiterhin kann die Verwendung besonders bevorzugt ausgeführt werden, wenn als Wasser Trinkwasser, Quellwasser, Brunnenwasser oder Leitungswasser verwendet wird

Weiterhin kann die Supplementierung mit der Zusammensetzung enthaltend Guanidinoessigsäure und Glycin dauerhaft über das Leben des Tieres oder in ausgewählten Phasen erfolgen. Besonders ausgewählte Phasen sind die Zeiträume des starken Wachstums und/oder des ersten Federwachstums oder des Mauserns.

Die vorliegende Erfindung betrifft weiterhin ein Verfahren zur Verminderung des Federverlustes von Vögeln, worin eine Zusammensetzung enthaltend Guanidinoessigsäure und Glycin den Vögeln während der Aufzucht, während der Haltung oder in der Mast der Vögel bereitgestellt wird, insbesondere zur Aufnahme *ad libitum* für die Vögel.

Die bevorzugten Ausgestaltungen für das erfindungsgemäße Verfahren sind bei den erfindungsgemäßen Verwendungen beschrieben.

Die vorliegende Erfindung betrifft weiterhin eine Zusammensetzung enthaltend Guanidinoessigsäure und Glycin zur Verwendung zur Verminderung des Federverlustes von Vögeln während der Aufzucht, während der Haltung oder in der Mast der Vögel.

Insbesondere betrifft die Erfindung eine Zusammensetzung bestehend aus Guanidinoessigsäure und Glycin zur Verwendung zur Verminderung des Federverlustes von Vögeln während der Aufzucht, während der Haltung oder in der Mast der Vögel.

Die bevorzugten Ausgestaltungen für die erfindungsgemäße Zusammensetzung sind bei den erfindungsgemäßen Verwendungen beschrieben.

Die nachfolgenden Beispiele sollen die vorliegende Erfindung veranschaulichen.

### Beispiele

### Versuch 1:

Aus einer Population von Farbenkanarien im Alter von 2 Jahren wurden 80 Tiere zufällig ausgewählt. Außerhalb der Mauser wurden diese paarweise in Volieren (LxBxH: 84 cm x 56 cm x 81,5 cm, Gitterabstand 10 mm) mit Plexiglasscheiben an den Seitenwänden im Abstand von 0,5 cm vom Gitter eingestellt. Wasser stand allen Tieren *ad libitum* über einen Wassernapf zur Verfügung. Futter wurde täglich in einen Hängenapf nachgefüllt. Die Käfige waren mit 1 Schaukel und 3 Holzsitzstangen ausgestattet.

Die Tiere wurden in 4 Gruppen a 10 Käfige x 2 Tiere aufgeteilt.

Gruppe 1 (Kontrollversuch) erhielt als Basisfutter Versele Laga Prestige VRS 20 kg (Zusammensetzung: 15 % Plata Hirse, 10 % Rübsen, 4 % Leinsamen, 23 % Schwarze Rübsen, 27 % Kanariensaat, 21 % Haferkerne).

Gruppe 2 erhielt das oben genannte Futter, das mit 0,1 % Guanidinoessigsäure angereichert wurde.

Gruppe 3 erhielt das oben genannte Futter, das mit 0,05 % Glycin angereichert wurde.

Gruppe 4 erhielt das oben genannte Futter, das mit 0,1 % Guanidinoessigsäure und 0,05 % Glycin angereichert wurde.

Das Futter wurde für beide Gruppen *ad libitum* bereitgestellt.

Ausgefallene Federn wurden täglich gruppenweise gesammelt und am Ende des Versuches nach 30 Tagen der Federverlust pro Gruppe gewogen und daraus der Federverlust pro Tier und Tag ermittelt:
Federverlust Gruppe 1: 6,47 mg/Tier/Tag
Federverlust Gruppe 2: 5,96 mg/Tier/Tag
Federverlust Gruppe 3: 6,28 mg/Tier/Tag
Federverlust Gruppe 4: 4,92 mg/Tier/Tag

Die Supplementierung mit Glycin hat nahezu keinen Einfluss auf den Verlust von Federn, Supplementierung mit Guanidinoessigsäure führt zu einem leicht niedrigeren Verlust an Federn. Die Supplementierung von Glycin und Guanidinoessigsäure führt zu einem deutlich geringeren Federverlust.

### Versuch 2:

192 Legehennen (Lohmann LSL-Classic, Alter: 38 Wochen) wurden nach dem Zufallsprinzip in 4 Gruppen a 48 Stück aufgeteilt und einzeln in Maschenkäfigen (30 x 45 cm²) über einen Zeitraum von 4 Wochen gehalten. Die Fronten wurden mit Scheiben versehen, um einen Verlust an ausgefallenen Federn zu vermeiden. Jede Henne hatte unbeschränkt Zugang zu zwei Nippeltränken. Das Futter wurde wie das Wasser für beide Gruppen *ad libitum* bereitgestellt, wobei die Futterstelle als auch das Wasser jeden Tag aufgefüllt wurde.

Als Basisfutter wurde eine Diät auf Basis Mais : Weizen : Sojabohnenkernmehl = 2,1212 : 1,1396 : 1 (Gewichtsverhältnisse) verwendet. Die Minimaltemperatur betrug 20 °C und der Raum wurde 14 Stunden beleuchtet und 10 Stunden verdunkelt. Unmittelbar nach Anschalten der Beleuchtung und unmittelbar vor dem Ausschalten der Beleuchtung wurden Kontrollgänge durchgeführt und zum Ausgleich von Abgängen in einer Gruppe auch je ein Tier aus den anderen Gruppen entfernt.

Federn wurden aus den Maschenkäfigen und aus der Kotbox wöchentlich aufgesammelt. Verunreinigte Federn wurden zuerst mechanisch, dann mit Wasser gereinigt und 24 h an Luft getrocknet.

Gruppe 1 (Gr1) wurde mit dem oben genannten Futter ernährt. Für die Gruppe 2 (Gr2) wurden zu 1000 kg von dem oben genannten Futter 600 g Guanidinoessigsäure zugegeben. Für die Gruppe 3 (Gr3) wurden zu 1000 kg von dem oben genannten Futter 100 g Glycin zugegeben. Für die Gruppe 4 (Gr4) wurden zu 1000 kg von dem oben genannten Futter 600 g Guanidinoessigsäure und 100 g Glycin zugegeben.

**Tabelle 1: Relativer Federverlust von Gruppe 4, 3 und 2 zu Gruppe 1 in der jeweiligen Woche (Versuch 2)**

| | **Woche 1** | **Woche 2** | **Woche 3** | **Woche 4** |
|---|---|---|---|---|
| Relativer Federverlust Gr2 / Gr1 | +1,5 % | - 4,8 % | - 6,0 % | - 5,3 % |
| Relativer Federverlust Gr3 / Gr1 | + 2,1 % | - 3,6 % | - 0,7 % | + 1,4 % |
| Relativer Federverlust Gr4 / Gr1 | - 6,2 % | -10,9% | - 16,4 % | - 14,7 % |

Bei der mit Guanidinoessigsäure und Glycin supplementierten Gruppe 4 wurde mit Werten zwischen 6,2 % und 16,4 % der geringste Federnverlust pro Versuchswoche ermittelt. Die Supplementierung mit Glycin (Gruppe 3) zeigte nahezu keinen Effekt. In Gruppe 2 war nur ein geringfügiger Effekt zu beobachten.

### Versuch 3:

2505 Masthähnchen (Cobb 400) wurden in einer Dichte von 94,5 square inch/Tier auf Sägespänen eingestallt. Wasser und Futter standen *ad libitum* zur Verfügung. In den ersten 15 Tagen wurde mit Infrarotlampen beheizt. Alle Tiere wurden 18 Tage mit einer Geflügelstarterdiät (Basis Weizen, Sojaextraktionsschrot, Mais, Sojabohnentoast, Maiskeime) ernährt: Gallugold^{®} Geflügelstarter OG (12,2 MJ/kg, 22,00 % Rohprotein, 0,62 % Methionin, 6,00 % Rohfett, 3,80 % Rohfaser, 6,80 % Rohasche, 0,95 % Calcium, 0,65 % Phosphor, 0,16 % Natrium; Zusatzstoffe pro kg Vitamin A 10.000 I.E., Vitamin D3 5.000 IE, Vitamin E 100 mg, Kupfer 10 mg, Selen 0,45 mg) ernährt. Am 18. Tag wurden 200 Tiere nach dem Zufallsprinzip ausgewählt und in 4 Gruppen a 50 Stück aufgeteilt. Gruppe 1 wurde mit Gallugold^{®} Geflügelkorn OG (Basis Mais, Sojabohnen, Weizen, Sojabohnentoast, Pflanzenöl, Maiskeime) ernährt (12,6 MJ/kg, 22,00 % Rohprotein, 0,56 % Methionin, 6,8 % Rohfett, 3,5 % Rohfaser, 9,0 % Rohasche, 0,90 % Calcium, 0,65 % Phosphor, 0,15 % Natrium; Zusatzstoffe pro kg Vitamin A 13.000 I.E., Vitamin D3 5.000 IE, Vitamin E 100 mg, Kupfer 10 mg, Selen 0,42 mg). Gruppe 2 wurde wie Gruppe 1 ernährt jedoch wurden dem Futter 0,06 Gew.-% Guanidinoessigsäure zugesetzt. Gruppe 3 wurde wie Gruppe 1 ernährt, jedoch wurden dem Futter 0,01 Gew.-% Glycin zugesetzt. Gruppe 4 wurde wie Gruppe 1 ernährt, jedoch wurden dem Futter 0,06 Gew.-% Guanidinoessigsäure und 0,01 Gew.-% Glycin zugesetzt wurden.

Am 20. bis zum 35. Tag wurden die Tiere in einen Stall mit 1 cm Sand umgestallt. Nach jeweils 3 Tagen wurden die Tiere in eine neue Stalleinheit mit 1 cm Sand umgestallt und manuell alle Federn des vorherigen Stalles gesammelt. Die Federn wurden unmittelbar nach der Sammlung gereinigt, gewaschen und getrocknet. Die gesammelten Federn jeder Gruppe vom 20. bis zum 35. Lebenstag wurden vereinigt und gewogen.

Bei einem Totalausfall in einer Gruppe wurde dieses Tier entfernt und durch Herausnehmen eines Tieres in den anderen Gruppen unmittelbar ein Ausgleich geschaffen. Kontrollgänge fanden 2 mal täglich statt.

**Tabelle 2: Relativer Federverlust von Gruppe 4, 3 und 2 zu Gruppe 1 (Versuch 3)**

| | **Tag 20 bis 35** |
|---|---|
| Relativer Federverlust Gr2 / Gr1 | - 4,3 % |
| Relativer Federverlust Gr3 / Gr1 | - 1,9 % |
| Relativer Federverlust Gr4 / Gr1 | - 17,2 % |

Bei der mit Guanidinoessigsäure und Glycin supplementierten Gruppe 4 gingen im Versuchszeitraum 17,2 % weniger Federnmasse verloren als in Gruppe 1.

## Patentansprüche

1. Verwendung einer Zusammensetzung enthaltend Guanidinoessigsäure und Glycin zur Verminderung des Federverlustes von Vögeln während der Aufzucht, während der Haltung oder in der Mast der Vögel.

2. Verwendung nach Anspruch 1, **dadurch gekennzeichnet, dass** die Zusammensetzung als Feststoffzubereitung in einem Futter für die Vögel bereitgestellt wird und das Futter ein Basisfutter, die Guanidinoessigsäure in einer Menge von 0,1 bis 5 g pro 1 kg Basisfutter und das Glycin in einer Menge von 0,01 bis 2,5 g pro 1 kg Basisfutter enthält.

3. Verwendung nach Anspruch 1, **dadurch gekennzeichnet, dass** die Zusammensetzung als Tränklösung für die Vögel bereitgestellt wird und die Tränklösung Wasser, die Guanidinoessigsäure in einer Menge von 0,05 bis 1,2 g pro 1 l Wasser und das Glycin in einer Menge von 0,005 g bis 0,12 g pro 1 l Wasser enthält.

4. Verwendung nach einem der vorgenannten Ansprüche 1 bis 3, **dadurch gekennzeichnet, dass** die Zusammensetzung, das Futter oder die Tränklösung den Vögeln ad-libitum für die Ernährung der Vögel bereitgestellt wird.

5. Verwendung nach Anspruch 1, **dadurch gekennzeichnet, dass** die Zusammensetzung
i) die Guanidinoessigsäure als freie Säure oder in Form eines Salzes dieser Säure und/oder
ii) das Glycin als freie Säure oder in Form eines Salzes dieser Säure,
enthält.

6. Verwendung nach einem der vorgenannten Ansprüche, **dadurch gekennzeichnet, dass** die Guanidinoessigsäure in Form eines Salzes der Guanidinoessigsäure verwendet wird, wobei das Salz ausgewählt wird aus der Gruppe der Alkali- oder Erdalkalisalze der Guanidinoessigsäure, insbesondere Natrium-Guanidinoacetat, Kalium-Guanidinoacetat, Magnesium-Guanidinoacetat oder Calcium-Guanidinoacetat.

7. Verwendung nach mindestens einem der vorgenannten Ansprüche, **dadurch gekennzeichnet, dass** das Glycin in Form eines Salzes des Glycin verwendet wird, wobei das Salz ausgewählt wird aus der Gruppe der Alkali- oder Erdalkalisalze des Glycins, insbesondere Natrium-Glycinat, Kalium-Glycinat, Magnesium-Glycinat oder Calcium-Glycinat.

8. Verwendung nach mindestens einem der vorhergehenden Ansprüche,
**dadurch gekennzeichnet, dass** die Vögel ausgewählt werden aus der Gruppe der Ziervögel, insbesondere Kanarienvögel, oder aus der Gruppe der Zucht und Mastvögel, insbesondere Geflügel, insbesondere Geflügel ausgewählt aus der Gruppe Enten, Gänse, Hühner, Hähnchen, Legehennen, Broiler, Truthähne, Wachteln, Sträuße und Puten.

9. Verwendung nach mindestens einem der vorhergehenden Ansprüche,
**dadurch gekennzeichnet, dass** das Basisfutter eine Brennwert von 8 MJ bis 20 MJ pro 1 kg Basisfutter aufweist und/ oder das Basisfutter ein bilanziertes Basisfutter gemäß Animal Nutrition Handbook, 3^{rd} Revision, 2014 Section 12, Poultry Nutrition and Feeding ist.

10. Verwendung nach mindestens einem der vorhergehenden Ansprüche,
**dadurch gekennzeichnet, dass** das Basisfutter umfasst
i) mindestens ein Getreide, ein Getreidemehl, ein Getreideschrot oder Extrakte hieraus, und/ oder
ii) mindestens einen weiteren Futtermittelzusatz ausgewählt aus der Gruppe Calciumcarbonat, Dicalciumphosphat, Aminosäuren oder Vitamine.

11. Verfahren zur Verminderung des Federverlustes von Vögeln, worin eine Zusammensetzung enthaltend Guanidinoessigsäure und Glycin den Vögeln während der Aufzucht, während der Haltung oder in der Mast der Vögel bereitgestellt wird, insbesondere zur Aufnahme *ad libitum.*

## Claims

1. Use of a composition comprising guanidinoacetic acid and glycine for reducing feather loss in birds during rearing, during keeping or during fattening of the birds.

2. Use according to claim 1, **characterized in that** the composition is provided as a solid preparation in a feed for the birds and the feed comprises a base feed, the guanidinoacetic acid in an amount of 0.1 to 5 g per 1 kg of base feed and the glycine in an amount of 0.01 to 2.5 g per 1 kg of base feed.

3. Use according to claim 1, **characterized in that** the composition is provided as a drinkable solution for the birds and the drinkable solution contains water, the guanidinoacetic acid in an amount of 0.05 to 1.2 g per 1 I of water and the glycine in an amount of 0.005 g to 0.12 g per 1 I of water.

4. Use according to any one of the preceding claims 1 to 3, **characterized in that** the composition, the feed or the drinkable solution for the nutrition of the birds is provided ad-libitum to the birds.

5. Use according to claim 1, **characterized in that** the composition comprises
i) guanidinoacetic acid as a free acid or in the form of a salt of this acid, and/or
ii) the glycine as a free acid or in the form of a salt of this acid.

6. Use according to any one of the preceding claims, **characterized in that** the guanidinoacetic acid is used in the form of a salt of the guanidinoacetic acid, the salt being selected from the group of alkali metal or alkaline earth metal salts of the guanidinoacetic acid, in particular sodium guanidinoacetate, potassium guanidinoacetate, magnesium guanidinoacetate or calcium guanidinoacetate.

7. Use according to at least one of the preceding claims, **characterized in that** the glycine is used in the form of a salt of the glycine, the salt being selected from the group of alkali metal or alkaline earth metal salts of the glycine, in particular sodium glycinate, potassium glycinate, magnesium glycinate or calcium glycinate.

8. Use according to at least one of the preceding claims, **characterized in that** the birds are selected from the group of cage birds, in particular canaries, or from the group of rearing and fattening birds, in particular poultry, in particular poultry selected from the group of ducks, geese, chickens, hens, laying hens, broilers, turkey cocks, quail, ostriches and turkey hens.

9. Use according to at least one of the preceding claims, **characterized in that** the base feed has a calorific value of 8 MJ to 20 MJ per 1 kg of base feed and/or the base feed is a balanced base feed according to Animal Nutrition Handbook, 3^{rd} Revision, 2014 Section 12, Poultry Nutrition and Feeding.

10. Use according to at least one of the preceding claims, **characterized in that** the basic feed comprises
i) at least one grain, a grain flour, a grain meal or extracts thereof, and/or
ii) at least one further feed additive selected from the group consisting of calcium carbonate, dicalcium phosphate, amino acids or vitamins.

11. Method for reducing feather loss in birds, wherein a composition comprising guanidinoacetic acid and glycine is provided to the birds during rearing, during keeping or during fattening of the birds, in particular for consumption ad *libitum.*

## Revendications

1. Utilisation d'une composition contenant de l'acide guanidinoacétique et de la glycine pour réduire la perte de plumes chez les oiseaux pendant l'élevage, la détention ou l'engraissement des oiseaux.

2. Utilisation selon la revendication 1, **caractérisée en ce que** la composition est fournie sous la forme d'une préparation solide dans un aliment pour les oiseaux et l'aliment contient un aliment de base, l'acide guanidinoacétique en une quantité de 0,1 à 5 g par 1 kg d'aliment de base et la glycine en une quantité de 0,01 à 2,5 g par 1 kg d'aliment de base.

3. Utilisation selon la revendication 1, **caractérisée en ce que** la composition est fournie sous la forme d'une solution à boire aux oiseaux et **en ce que** la solution à boire contient de l'eau, l'acide guanidinoacétique en une quantité de 0,05 à 1,2 g pour 1 l d'eau et la glycine en une quantité de 0,005 g à 0,12 g pour 1 l d'eau.

4. Utilisation selon l'une quelconque des revendications 1 à 3 précitées, **caractérisée en ce que** la composition, la nourriture ou la solution à boire est fournie aux oiseaux ad libitum pour l'alimentation des oiseaux.

5. Utilisation selon la revendication 1, **caractérisée en ce que** la composition contient
i) l'acide guanidinoacétique sous forme d'acide libre ou sous forme de sel de cet acide et/ou
ii) la glycine sous forme d'acide libre ou sous forme d'un sel de cet acide.

6. Utilisation selon l'une quelconque des revendications précédentes, **caractérisée en ce que** l'acide guanidinoacétique est utilisé sous forme d'un sel de l'acide guanidinoacétique, ledit sel étant choisi dans le groupe des sels alcalins ou alcalino-terreux de l'acide guanidinoacétique, notamment le guanidinoacétate de sodium, le guanidinoacétate de potassium, le guanidinoacétate de magnésium ou le guanidinoacétate de calcium.

7. Utilisation selon au moins l'une des revendications précédentes, **caractérisée en ce que** la glycine est utilisée sous forme d'un sel de la glycine, ledit sel étant choisi dans le groupe des sels alcalins ou alcalino-terreux de la glycine, notamment le glycinate de sodium, le glycinate de potassium, le glycinate de magnésium ou le glycinate de calcium.

8. Utilisation selon au moins l'une des revendications précédentes, **caractérisée en ce que** les oiseaux sont choisis dans le groupe des oiseaux d'ornement, notamment des canaris, ou dans le groupe des oiseaux d'élevage et d'engraissement, notamment des volailles, notamment des volailles choisies dans le groupe des canards, des oies, des poules, des poulets, des poules pondeuses, des poulets de chair, des dindots, des cailles, des autruches et des dindes.

9. Utilisation selon au moins l'une des revendications précédentes, **caractérisée en ce que** l'aliment de base a une valeur énergétique de 8 MJ à 20 MJ par kg d'aliment de base et/ou l'aliment de base est un aliment de base équilibré selon l'Animal Nutrition Handbook, 3rd Revision, 2014 Section 12, Poultry Nutrition and Feeding.

10. Utilisation selon au moins l'une des revendications précédentes, **caractérisée en ce que** l'aliment de base comprend
i) au moins une céréale, une farine de céréale, de céréales concassées ou des extraits de ceux-ci, et/ou
ii) au moins un autre additif alimentaire choisi dans le groupe constitué par le carbonate de calcium, le phosphate dicalcique, les acides aminés ou les vitamines.

11. Procédé pour réduire la perte de plumes chez les oiseaux, dans lequel une composition contenant de l'acide guanidinoacétique et de la glycine est fournie aux oiseaux pendant l'élevage, la détention ou l'engraissement des oiseaux, en particulier pour une consommation *ad libitum.*
